# EUROPEAN PATENT APPLICATION

(11) **EP 0 618 501 A1**
(43) Date of publication of application: **05.10.1994**
(21) Application number: 94103742.6
(22) Date of filing: 11.03.1994
(51) Int. Cl.: G03D 15/00

(54) **Index print which indicates that an image stored on an image bearing medium was not properly recorded**

(30) Priority: 30.03.1993 US 40398
(71) Applicant: EASTMAN KODAK COMPANY, Rochester, New York 14650-2201 (US)
(72) Inventor: Manico, Joseph Anthony, c/o Eastman Kodak Co., Rochester, New York 14650-2201 (US)
(74) Representative: Blickle, K. Werner, Dipl.-Ing.

(57) **Abstract**

An index print (10) of a plurality of visible positive images which represents respective recorded images recorded on an image bearing medium (50). The index print (10) includes a print sheet (66) having a plurality of predetermined successive spaces with the visible positive images being printed on the predetermined spaces. The index print (10) is characterized in that at least one of the predetermined successive spaces includes a visible indicator in or adjacent the space for indicating that the recorded image to be represented at that space by a visible positive image was not properly recorded on the image bearing medium (50).

## Description

### BACKGROUND OF THE INVENTION

### Field of Invention

The present invention relates generally to image presentation and, more specifically, to an index print which indicates that an image stored on an image bearing medium was not properly recorded.

### Description of the Related Art

U.S. Patent No. 4,805,039, which issued on February 14, 1989 in the names of Otake et al, discloses an index print on which are printed, as small-size positive images in parallel rows, a plurality of scenes recorded on an image bearing medium such as, for example, a photographic film, a still video floppy, a video cassette or a video disc. The small positive images are preferably arranged in the same order they were taken and frame numbers are printed in juxtaposition with the respective positive images.

To produce such an index print from photographic film, a plurality of strips of negatives are copied onto photographic paper in a reduced size with the negative strips inserted in a negative sheath. For a magnetic or optical image bearing medium having a very large number of images, a lesser plurality of scenes are read out and edited in such a manner as to arrange them in a representative sample and thereafter print them on the index print.

The index print provides a positive, easily identifiable record of the images on the image bearing medium and allows an outline of the contents recorded on the image bearing medium to be obtained at a glance. Further, the index print facilitates a quick, simple identification and order-of-exposure sequencing of the images on the image bearing medium for the purposes of selecting those which a customer might wish to view or have duplicated. The index print is particularly useful when the image bearing medium is not configured in a way that permits the customer to directly view the stored images (e.g. when film negatives are returned in a cartridge or the images are stored in an electronic data storage device.

### Problems to be Solved by the Invention

Periodically the image bearing medium will contain images which were not properly recorded. Improper recording may be due to poor exposure density and/or color variation. For example, with silver halide film, the film may be underexposed, overexposed, double exposed, outdated or stored in poor conditions (e.g. high temperatures). Other problems could be the failure to use a flash in low light conditions or to remove the lens cap from the camera.

With the index print disclosed in Otake all images selected for printing on the index print are apparently printed regardless of whether or not the images were properly recorded on the image bearing medium. Printing low quality images on the index print (1) can confuse the customer because the customer may not have received a service print of the low quality image and (2) may further cause problems because the customer, when reordering images, may mistakenly order a copy of low quality images. Further, the customer will waste time when viewing the index print unnecessarily reviewing the low quality images.

In addition, when a customer does not receive a service print back because of low quality, the prior art does not provide for indicating to the customer what caused the low image quality. Not knowing what caused a low quality image can be very frustrating to the customer because they have lost an image and do not know the reason why they lost the image. Additionally, because the customer does not know what caused the poor image, they cannot learn from their mistake. As a result the customer may continue to make the same mistake(s) repeatedly, losing more images to low quality.

### SUMMARY OF THE INVENTION

According to one aspect of the invention, an index print of a plurality of visible positive images is provided which represents respective recorded images recorded on an image bearing medium. The index print includes a print sheet having a plurality of predetermined successive spaces with the visible positive images being printed on the predetermined spaces. The index print is characterized in that at least one of the predetermined successive spaces includes a visible indicator in or adjacent the space for indicating that the recorded image to be represented at that space by a visible positive image was not properly recorded on the image bearing medium.

According to various preferred embodiments of the invention, the visible indicator can include the absence of any visible positive image at that space with or without text or symbols indicating why the recorded image to be represented at that space was not properly recorded. A visible positive image which was not properly recorded on the image bearing medium can be printed in a predetermined space with the above described text or symbols being overlayed on or located adjacent to this visible positive image.

### Advantageous Effects of the Invention

A feature of the present invention is to provide an index print in which images which were not properly recorded on an image bearing medium are indicated as such on the index print.

An advantage of a preferred embodiment of the present invention is that images on an image bearing medium of low quality are automatically identified as such on the index print without operator intervention. Identifying low quality images avoids customer confusion, as described above, and prevents the customer from wasting time trying to comprehend a low quality image. A further advantage of a preferred embodiment of the invention is that a reason for a low quality image is provided to the customer. Providing a reason for the low quality image to the customer enables the customer to avoid the same mistake in the future which caused the low quality image.

These and other aspects, objects, features and advantages of the present invention will be more clearly understood and appreciated from a review of the following detailed description of the preferred embodiments and appended claims, and by reference to the accompanying drawings.

### BRIEF DESCRIPTION OF THE DRAWINGS

FIG. 1 is a schematic view showing one example of an index print making apparatus;
FIG. 2 A, B is a flow diagram outlining steps used in creating an index print;
FIG. 3 A, B is an index print including poor quality images and messages indicating what caused the poor quality;
FIG. 4 is an index print having blank spaces where a poor quality print would have been printed had it been a high quality print;
FIG. 5 is the index print of FIG. 4 with messages printed in the blank spaces;
FIG. 6 is a front view of an optical index print printer equipped with an annotation printing device; and
FIG. 7 is a side view of the optical index print printer of FIG. 6.

### DESCRIPTION OF THE PREFERRED EMBODIMENTS

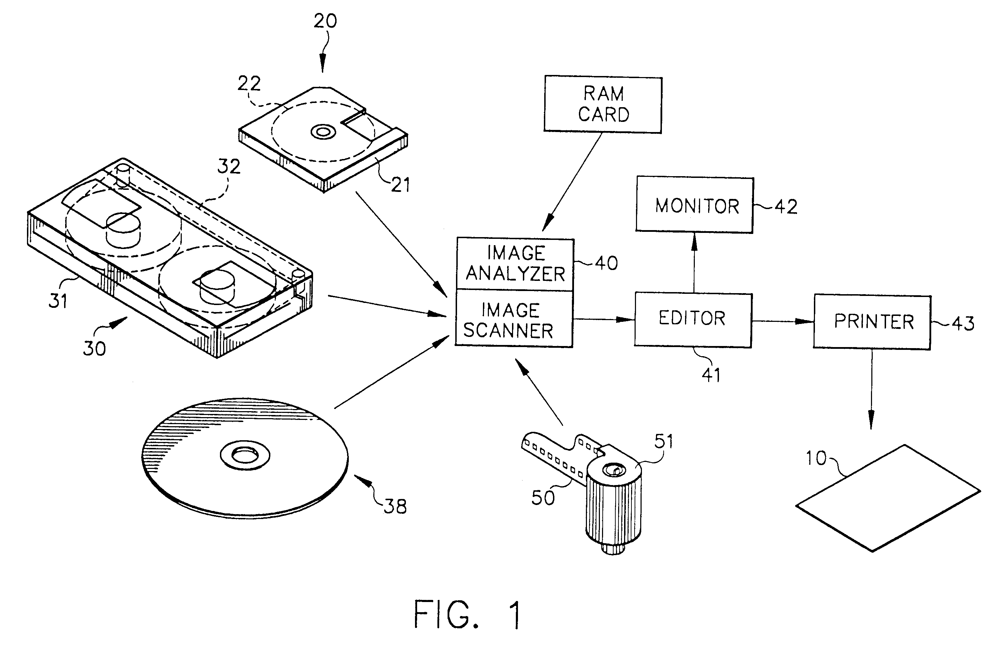

FIG. 1 illustrates an index-print-making apparatus. Used as the image bearing medium are, for example, a still video floppy 20, a video cassette 30, a video disc 38, silver-halide film 50, a ram card (not shown) etc. Rotatably included within a pack 21 of the still video floppy 20 is a magnetic sheet 22, and up to 25 images are recordable when recorded framewise. In a field recording mode, 50 images are recordable. Included in a cartridge 31 of the video cassette 30 is a magnetic tape 32, and a very large number of images are recorded thereon in the form of magnetic signals. The video disc is an electric capacity means or an optical means according to its reading-out means. The silver halide film 50, stored in a cartridge 51 or, provided in cut strips or roll form , typically contains up to 40 images represented as negative images.

The image bearing medium is loaded in an image reader 40. Reader 40 includes an image analyzer and an image scanner. Selected recorded signals are read out by the reader 40 and fed to an editor 41. The editor 41 picks up the desired images from among all the images, arranges them in the order for printing and assigns a number to each of them. The images thus arranged can be confirmed by a monitor 42. The edited plurality of images are fed to a printer 43 and printed as a plurality of visible positive images on a print sheet. In this way, the index print 10 is made.

The following describes more specifically how an index print 10 is made from film 50. After the film is chemically processed the film is loaded into image reader 40. Image reader 40 includes an image analyzer and an image scanner.

The image analyzer, such as that used in the Kodak CLAS 35 Automatic Photographic Printer, uses an array of light sensing elements to measure a matrix of individual densities of each image frame on negative 50. The relative and average density values from a given frame are used to determine the level of exposure compensation required to properly print the frame. When the density values are too high the frame is determined to be grossly overexposed or fogged. When the density values are too low the frame is determined to be grossly underexposed or blank. When the density values are unmodulated a gross focus failure or fogging of the film has probably occurred. In all of these cases the image on the frame was not properly recorded and the image is not printed.

The image analyzer can also include that portion of the Agfa MSP Printer which analyzes image frames for focus problems. This printer uses a high resolution monochrome scanner and an Automatic Sharpness Detection (ASD) algorithm to determine when the negative frame is out of focus. When a frame is out of focus it is not printed. Neither of the above two printers communicate to the customer the reason why a frame was not printed.

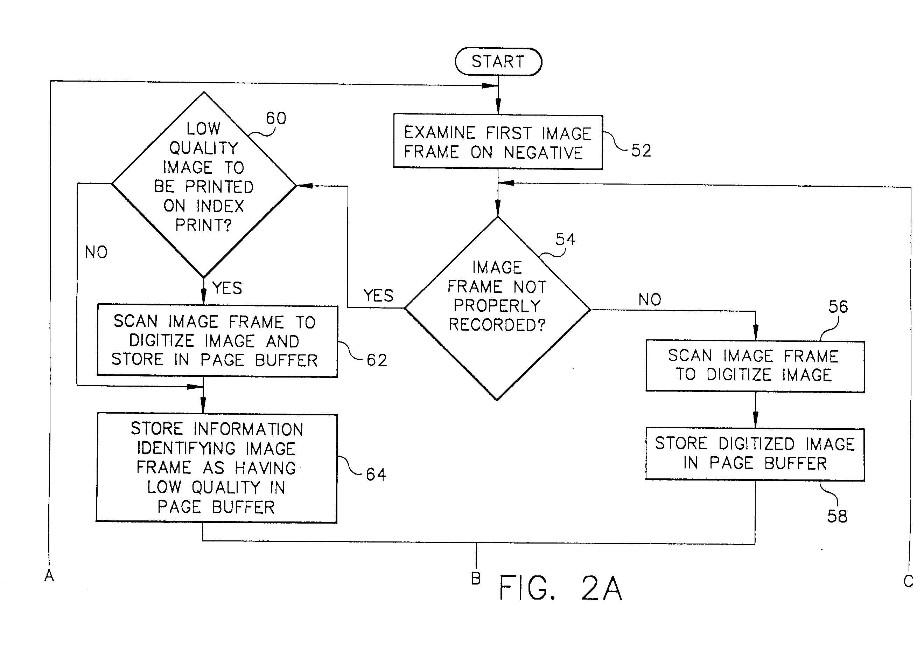

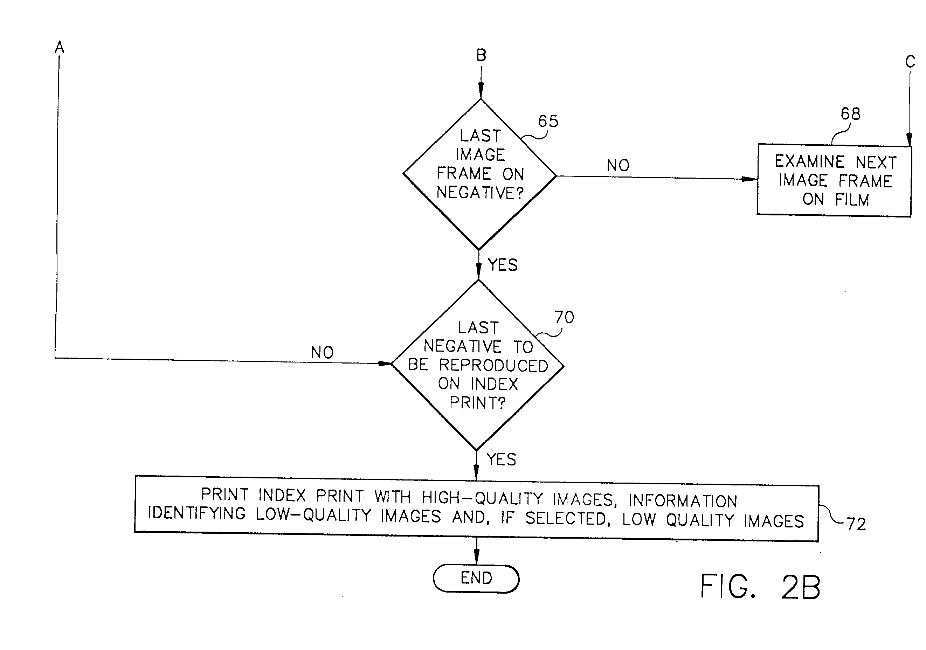

Referring to FIG. 2, the image analyzer examines a first image frame on a negative in a step 52 to determine if the image was properly recorded. Improper recording may be caused by such things as overexposure or underexposure of film 50. In a step 54 a determination is made as to whether the image was properly recorded. When the image is properly recorded the image is scanned in a step 56 by the image scanner, such as a Kodak Photo CD Film Scanner, to digitize the image. The digitized image is stored in a page buffer in image reader 40 in a step 58.

When the image is not properly recorded a decision is made in a step 60 as to whether the low quality image is to be printed on the index print. This would be decided by the customer when submitting the film for processing. When the low quality image is to be printed on the index print the low quality image is scanned to digitize the image with the digitized image being stored in the page buffer in a step 62.

Whether or not the low quality image is to be printed, a visible indicator identifying the image as having low quality is stored in the page buffer in a step 64. The visible indicator can include text or symbols and is preferably prestored in a nonvolatile memory in image reader 40.

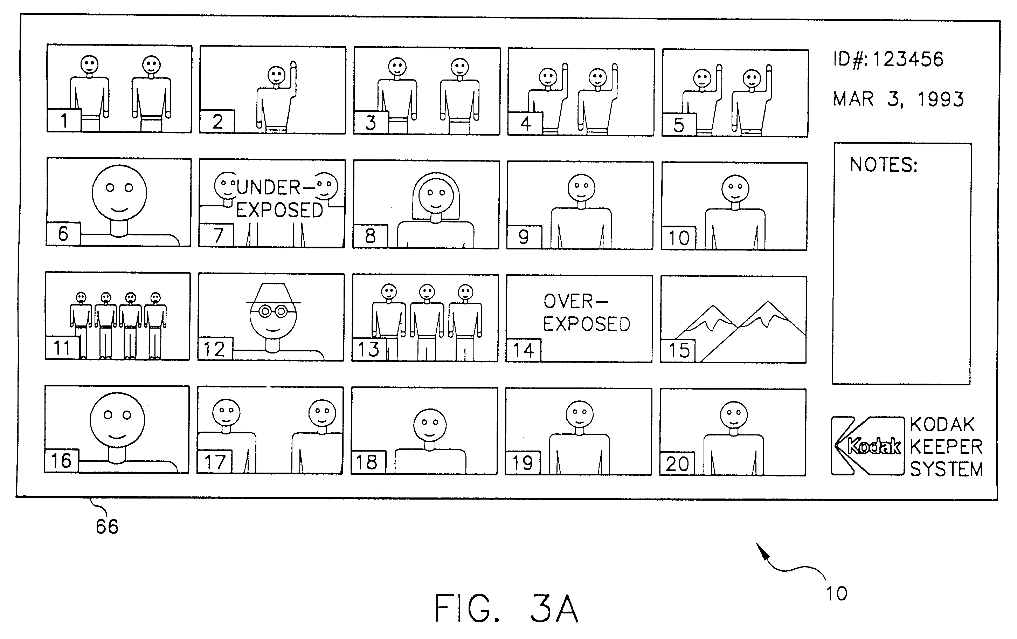

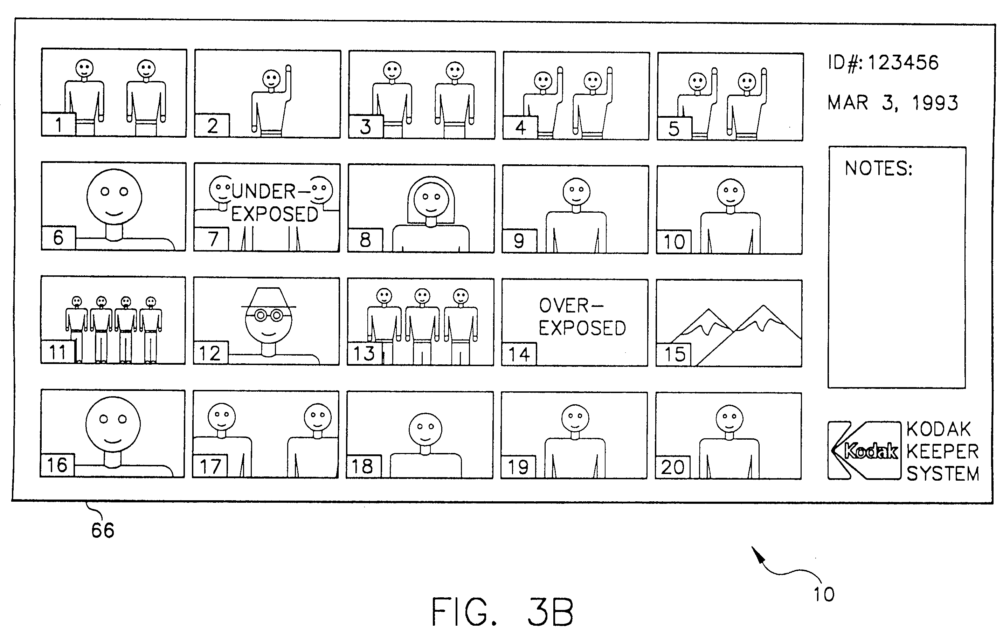

When the low quality image is to be printed on the index print the visible indicator can include a message, preferably overlayed on or adjacent to the low quality image, indicating what caused the low quality of the image. Such a message could be "OVEREXPOSED" or "UNDEREXPOSED". This situation is represented in FIGS. 3A and 3B. It can be seen that a plurality of visible positive images have been created in predetermined successive spaces on a print sheet 66. The image in frame 7 is indicated as having been underexposed while the image in frame 14 is indicated as having been overexposed.

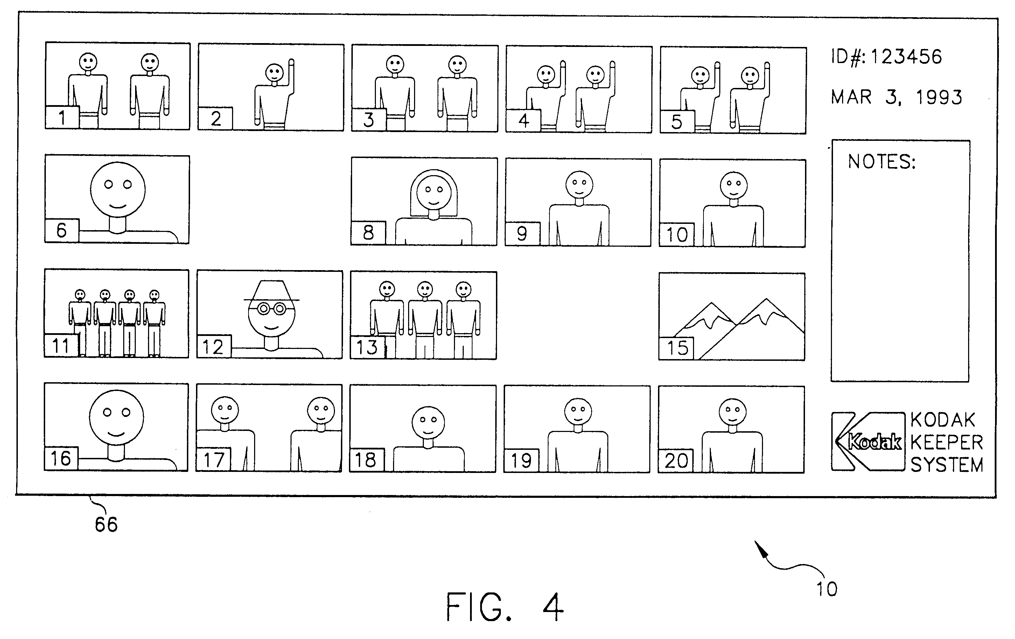

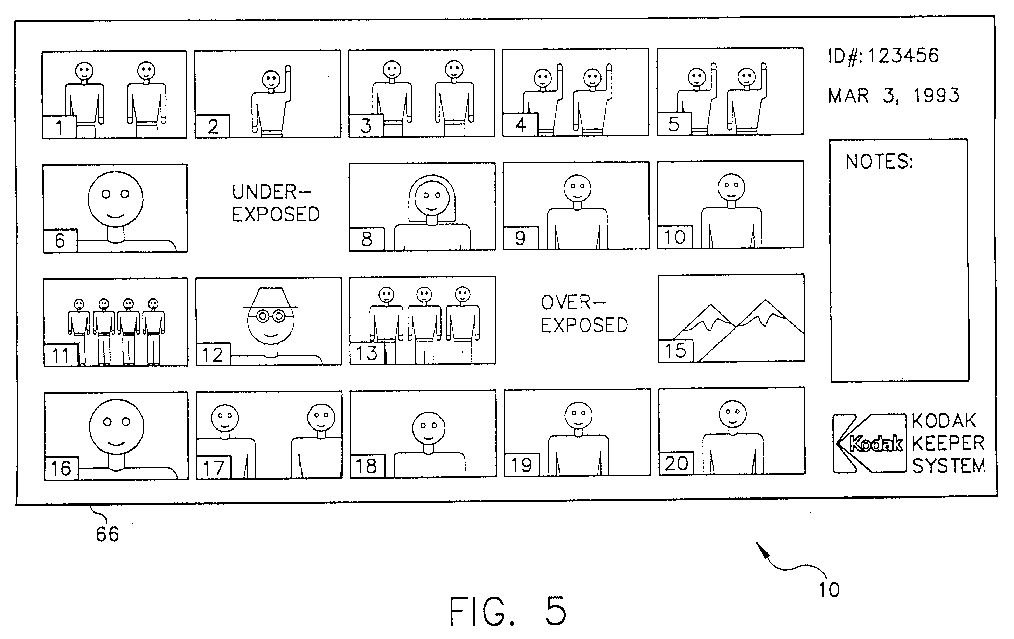

When the low quality image is not to be printed on the index print the visible indicator can be the absence of any visible positive image. This creates a blank area where the image would have been printed had the image been a high quality image. Instead of a blank area an image can be printed in this area having the same color and density as a print sheet on which the images are printed to form the index print. This situation is represented in FIG. 4 in which frames 7 and 14 have been left blank due to low image quality in these frames. Additionally, a message can be printed in the blank space indicating what caused the low quality of the image. This situation is represented in FIG. 5.

In a step 65 a determination is made as to whether the present image frame is the last frame on the negative. When the frame is not the last image frame the next image frame is examined by the image analyzer in a step 68. When the frame is the last image frame a determination is made in a step 70 as to whether the negative is the last negative to be produced on the index print. This handles the situation where cut strips of negatives are sequentially fed to the image reader. When the negative is not the last negative the next negative's first image frame is examined in step 52.

When the negative is the last negative, the index print is printed in a step 72 by a printer 43, such as a Kodak PCD Printer. The printer prints high quality images on print sheet 66 along with information identifying low quality images as such. The low quality images may or may not be printed also.

Referring to FIGS. 3-5, it can be seen that the blank space with or without a message maintains a relative position and sequence of the plurality of high quality images on the print sheet. Preferably, the plurality of high quality images are printed on the print sheet in the same sequence that they are arranged in on the image bearing medium. This sequence can be first to last or last to first. The image in the upper left corner of the index print is preferably the first image accessible on the image bearing medium.

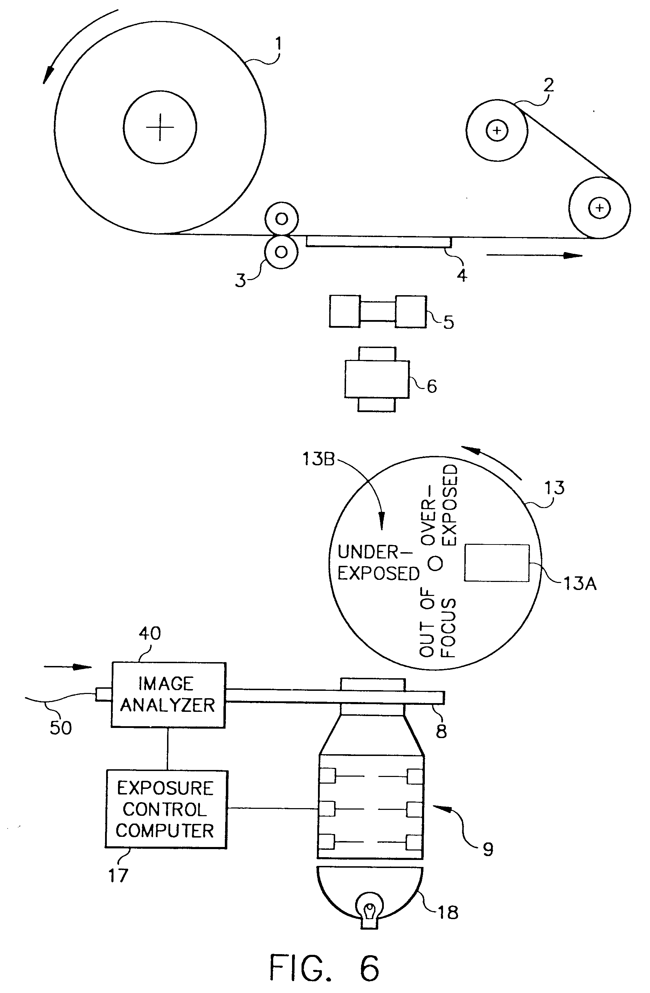

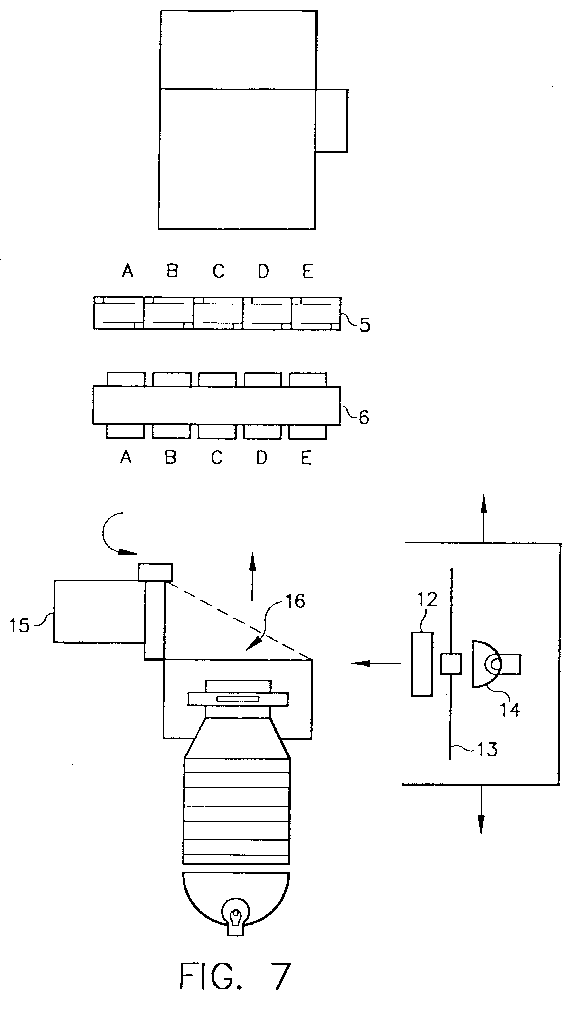

Referring now to FIGS. 6 and 7, an optical index print printer will be described. In this embodiment image reader 40 includes an image analyzer but not an image scanner. A paper supply 1 is advanced by a paper take up 2 and a pair of metering rollers 3 to dispense a portion of photographic paper required to print one row or column, depending on the overall index print orientation, of index print images. A paper mask 4 masks the photographic paper except for the areas on the paper which are to be imaged. A first image on film 50 is analyzed by the image analyzer to determine if the image was properly recorded. This image is then moved into a printing aperture of a motorized negative mask/gate 8.

When the image was properly recorded an exposure control module 9 is adjusted to the appropriate settings, as determined by the image analyzer and an exposure control computer 17, to yield an image on the index print of acceptable color and density. An exposure light source 18 is actuated with light produced thereby passing through the image on negative 50 and a lens array 6. A shutter A of a lens shutter array 5 opens for a duration determined by the exposure control computer and then closes. This exposes a portion of the photographic paper to light creating a latent image on the paper.

The paper position in paper mask 4 remains fixed and a second image on film 50 is analyzed by the image analyzer and moved to motorized negative mask gate 8. Assuming the second image was properly recorded the above process is repeated. However, for the second image shutter B of lens shutter array is opened for a duration determined by the exposure control computer and then closes. This process continues until up to, for example, five images have been imaged onto a row or column on the photographic paper. After a complete row or column has been imaged, paper metering rollers 3 dispense the next row or column of photographic paper and the process continues.

When the image analyzer detects a low quality image which was not properly recorded it will determine the cause of the low quality and inform computer 17. When the low quality image is not to be printed on the index print an annotation film mirror 15 is moved from a stand by position, shown in solid lines, to an in use position shown by dashed lines 16. Computer 17 rotates a positionable annotation film negative 13 to position an appropriate message 13B, indicating what caused the low quality, or a blank image 13A adjacent an annotation film negative mask/gate. The appropriate shutter in lens shutter array 5 is opened and the message or blank image is illuminated by a lamp 14. When a blank image is formed the result will be similar to frame 7 or 14 of FIG. 4. When a message is imaged the result will be similar to frame 7 or 14 of FIG. 5.

When a low quality image is to be printed on the index print it will be printed as described above. A message would then be created on the index print preferably adjacent the poor quality image. In order to create the message adjacent the low quality image, mask/gate 12, negative 13 and lamp 14 are moved in unison to a position where a message can be created adjacent the low quality image on the index print. Because film 13 is in a secondary optical path the message can be positioned relative to motorized negative mask gate 8 allowing the message to appear in an index image frame or adjacent to the frame. As such, the low quality image on film 50 and a message can be combined with multiple exposures. The results of such an operation are represented in frames 7 and 14 of FIG. 3.

While the invention has been described with particular reference to preferred embodiments, it will be understood by those skilled in the art that various changes may be made and equivalents may be substituted for elements of the preferred embodiment without departing from the invention. In addition, many modifications may be made to adapt a particular situation and material to a teaching of the invention without departing from the essential teachings of the present invention.

### Parts List for FIGS. 1-7

- 1 -: paper supply
- 2 -: paper take up
- 3 -: paper metering rollers
- 4 -: paper mask
- 5 -: lens shutter array
- 6 -: printing lens array
- 8 -: motorized negative mask gate
- 9 -: exposure control module
- 10 -: index print
- 12 -: annotation film negative mask/gate
- 13 -: positionable annotation film negative
- 14 -: annotation film printing lamp
- 15 -: annotation film exposure mirror
- 17 -: exposure control computer
- 18 -: printing lamp
- 20 -: still video floppy
- 21 -: pack
- 22 -: magnetic sheet
- 30 -: video cassette
- 31 -: cartridge
- 32 -: magnetic tape
- 38 -: video disc
- 40 -: image reader
- 41 -: editor
- 42 -: monitor
- 43 -: printer
- 50 -: silver halide film
- 51 -: cartridge
- 66 -: print sheet

## Claims

1. An index print of a plurality of visible positive images representing respective recorded images recorded on an image bearing medium, wherein said index print comprises a print sheet having a plurality of predetermined successive spaces with said visible positive images printed on said predetermined spaces, and is characterized in that:
at least one of said predetermined successive spaces includes visible indicator means in or adjacent said space for indicating that the recorded image to be represented at that space by a visible positive image was not properly recorded on the image bearing medium, said indicator means including text or symbols indicating why the recorded image to be represented at that space was not properly recorded.

2. The index print of claim 1 wherein said indicator means is located in said at least one predetermined successive space.

3. The index print of claim 1, further characterized in that:
said at least one predetermined successive space includes a visible positive image which was not properly recorded on the image bearing medium, said text or symbols being overlayed on or located adjacent to said visible positive image.

4. A method of producing an index print of a plurality of visible positive images representing respective recorded images recorded on an image bearing medium, wherein said method comprises the step of printing on a print sheet, in a plurality of predetermined successive spaces on the print sheet, the plurality of visible positive images, and is characterized by the step of:
indicating at least one of said predetermined successive spaces, with visible indicator means in or adjacent said space, that the recorded image to be represented at that space by a visible positive image was not properly recorded on the image bearing medium, said indicating step being effective to produce text or symbols at said at least one predetermined successive space indicating why the recorded image to be represented at that space was not properly recorded.

5. The method of claim 4 wherein said indicating step is effective to locate said text or symbols in said at least one predetermined successive space.

6. The method of claim 4, further characterized by the step of:
creating a visible positive image of an image which was not properly recorded on the image bearing medium at said at least one predetermined successive space, said indicating step being effective to locate said text or symbols adjacent said visible positive image.

7. Apparatus for producing an index print of a plurality of visible positive images representing respective recorded images recorded on an image bearing medium, said apparatus comprising means for printing on a print sheet, in a plurality of predetermined successive spaces on the print sheet, the plurality of visible positive images, characterized by:
means for indicating at least one of said predetermined successive spaces, with visible indicator means in or adjacent said space, that the recorded image to be represented at that space by a visible positive image was not properly recorded on the image bearing medium, said indicating means being effective to produce text or symbols at said at least one predetermined successive space indicating why the recorded image to be represented at that space was not properly recorded.

8. The apparatus of claim 7 wherein said indicating means is effective to locate said text or symbols in said at least one predetermined successive space.

9. The apparatus of claim 7, further characterized by:
means for creating a visible positive image of an image which was not properly recorded on the image bearing medium at said at least one predetermined successive space, said indicating means being effective to locate said text or symbols adjacent said visible positive image.

10. Apparatus for producing a print of a visible positive image representing an image which was not properly recorded on an image bearing medium, said apparatus comprising:
means for automatically determining why the image recorded on the image bearing medium was not properly recorded;
means for printing on a print sheet the visible positive image; and
means for indicating on said print sheet, with visible indicator means, that the recorded image represented on said print sheet by said visible positive image was not properly recorded on the image bearing medium, said indicating means being effective to produce text or symbols indicating why the recorded image was not properly recorded.

11. The apparatus of claim 10 wherein said text or symbols are located adjacent said visible positive image on said print sheet.

12. The apparatus of claim 10, wherein said text or symbols are superimposed over said visible positive image on said print sheet.
